# EUROPEAN PATENT APPLICATION

(11) **EP 1 564 125 A1**
(43) Date of publication of application: **17.08.2005**
(21) Application number: 05002170.8
(22) Date of filing: 02.02.2005
(51) Int. Cl.: B62K 21/14

(54) **Handlebar with vibration damping**

(30) Priority: 17.02.2004 US 780033
(71) Applicant: Specialized Bicycle Components, Inc., Morgan Hill, CA 95037 (US)
(72) Inventor: D'Aluisio, Christopher P., Watsonville, California 95076 (US)
(74) Representative: Grünecker, Kinkeldey, Stockmair & Schwanhäusser Anwaltssozietät

(57) **Abstract**

A handlebar assembly comprising a handlebar (65), an outer member (70) at least partially surrounding a portion of the handlebar (65) and positioned to be clamped by a steering stem, and a damping member (75) disposed between the handlebar (65) and the outer member (70).

## Description

### Background

The present invention generally relates to bicycles, and particularly to handlebars that attach to bicycles.

Bicycles typically include handlebars that attach to the front wheel of the bicycle to allow the rider to steer. Often the handlebars are formed from a metal tube and are clamped directly to a steering stem. The stem attaches to a fork that supports the front wheel for rotation. On some bicycles, the handlebars support bicycle controls, such as shifters and brake levers, in easily accessible positions.

During a bicycle ride, the rider will often encounter bumps or uneven road conditions that cause vibrations. Because most handlebars are rigidly connected to the front wheel, the vibrations are easily transmitted from the front wheel to the handlebars. From the handlebars, the vibrations can pass into the rider's arms and hands. These vibrations can be uncomfortable to the rider.

### Summary

The present invention provides a bicycle handlebar assembly designed to reduce the transfer of vibrations to the rider. The handlebar assembly includes an outer member (e.g., a cylindrical tube) attached to a stem and an inner member (e.g., handlebars) that is shaped to define hand locations. The outer member at least partially surrounds a portion of the inner member to define a space (e.g., about 1.4 mm thick) between the two members. A damping member (e.g., made from urethane rubber) is positioned between the inner and outer members, and preferably bonds them together. The damping member provides vibration damping to reduce the vibrations transferred to the inner member.

In one embodiment, the damping member extends beyond the ends of the outer member. In another embodiment, the outer member includes a window that exposes a portion of the damping member.

### Brief Description of the Drawings

The detailed description particularly refers to the accompanying figures in which:
Fig. 1 is a perspective view of a bicycle including a handlebar assembly embodying the present invention;
Fig. 2 is an enlarged perspective view of the handlebar assembly of Fig. 1;
Fig. 3 is an enlarged perspective view of a handlebar attachment area of Fig. 2;
Fig. 4 is an enlarged section view of the handlebar attachment area;
Fig. 5 is a section view of the handlebar attachment area of Fig. 4 taken along line 5-5;
Fig. 6 is a perspective view of one half of a mold that can be used to produce the handlebar assembly of Figs. 1-5; and
Fig. 7 is an exploded perspective view of an alternative embodiment of the present invention.

Before any embodiments of the invention are explained, it is to be understood that the invention is not limited in its application to the details of construction and the arrangements of components set forth in the following description or illustrated in the following drawings. The invention is capable of other embodiments and of being practiced or of being carried out in various ways. Also, it is to be understood that the phraseology and terminology used herein is for the purpose of description and should not be regarded as limiting. The use of "including," "comprising," or "having" and variations thereof is meant to encompass the items listed thereafter and equivalence thereof as well as additional items. The terms "connected," "coupled," and "mounted" and variations thereof are used broadly and encompass direct and indirect connections, couplings, and mountings.

### Detailed Description of the Drawings

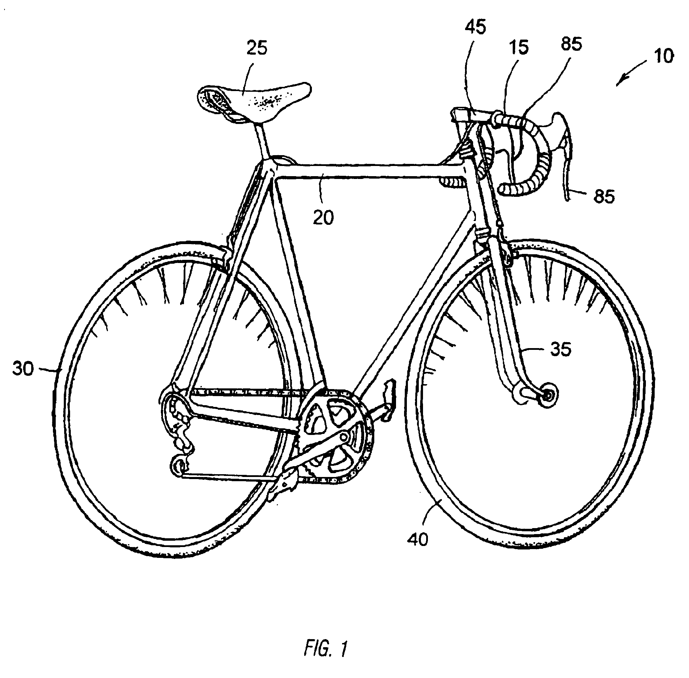

Fig. 1 illustrates a bicycle 10 including a handlebar assembly 15 embodying the present invention. The bicycle 10 includes a frame 20 that supports a seat 25, a rear wheel 30, a front fork 35, and a front wheel 40. A rider sits on the seat 25 and pedals the bicycle 10 to rotate the rear wheel 30 and propel the bicycle 10, as is well known in the art. The front fork 35 passes through a portion of the frame 20 and pivotally supports the front wheel 40 so that the rider is able to steer the bicycle 10. A steering stem 45 is attached to, or is formed as part of, the fork 35 and facilitates the attachment of the handlebar assembly 15 to the fork 35. It should be noted that the bicycle 10 shown in Fig. 1 is but one example of a bicycle suited to use with the present invention. As such, the present invention should not be limited to the illustrated example. For example, the stem can be anything that connects the handlebar to the fork, such as a triple clamp. Furthermore, the present invention is well suited to use with any type of handlebar design. Thus, while a drop handlebar assembly 15 (e.g., Maes, randonneur, anatomic, and the like) is illustrated, other handlebars (e.g., moustache, north road bend, aero bars, and the like) will also function with the present invention.

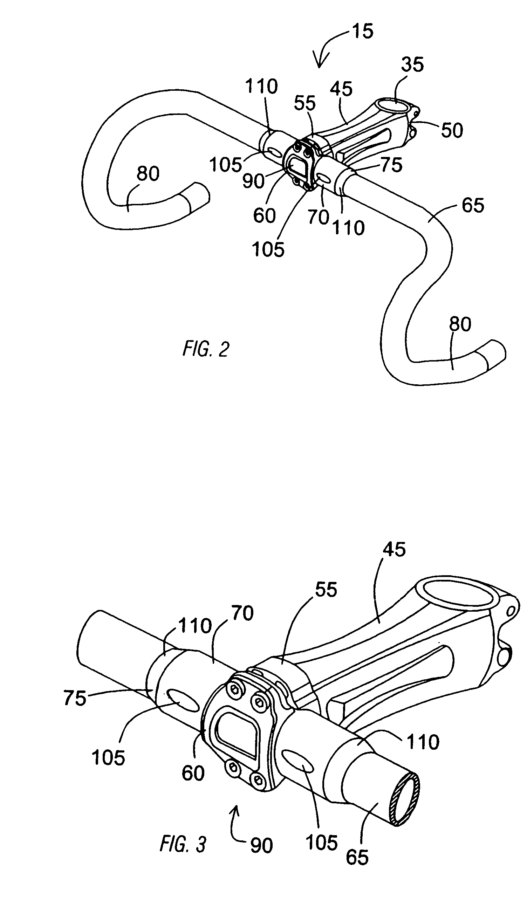

The attachment between the stem 45 and the handlebar assembly 15 is shown in greater detail in Fig. 2. The stem 45 includes a first end 50 that clamps to the fork 35 and a second end 55 that includes a split clamp 60 for clamping the handlebar assembly 15. The split clamp 60 allows the rider to adjust the rotational position of the handlebar assembly 15 as desired.

The handlebar assembly 15 includes an inner member in the form of an inner tube 65, an outer member in the form of an outer tube 70, and a damping member 75. The inner tube 65 is similar to standard handlebars and is formed into the desired handlebar shape to include hand positions 80. Adjacent the hand positions 80 are various bicycle controls, such as shifter and brake control levers 85 (shown in Fig. 1). In the illustrated embodiment, the inner tube 65 is formed from a circular hollow aluminum tube having an outside diameter of about 26 mm. However, other constructions may use other materials (e.g., steel, other alloys, composites such as carbon fiber/kevlar, and the like) and other diameters (e.g., between about 10 mm and 35 mm).

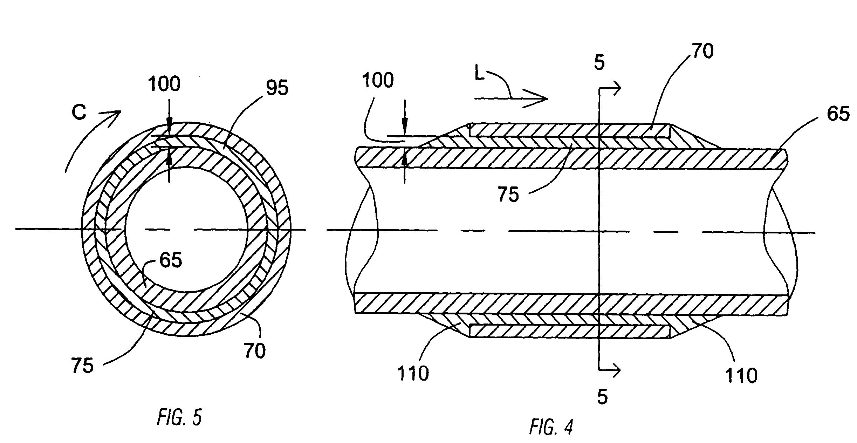

As illustrated in Fig. 3, the outer tube 70 surrounds a central portion of the inner tube 65 to define an attachment area 90. The outer tube 70 can be manufactured from materials similar to those used to manufacture the inner tube 65. The outer tube 70 has an inside diameter that is larger than the outside diameter of the inner tube 65 and an outside diameter that is sized to engage the second end 55 of the stem 45. In the illustrated embodiment, the outer tube 70 has an outside diameter of about 31.8 mm and an inside diameter of about 28.8 mm. When concentrically positioned, the inner tube 65 and the outer tube 70 cooperate to define an annular space 95 having a thickness 100 of about 1.4 mm. It should be understood that the thickness of the annular space 95 could vary while staying within the scope of the present invention.

In most constructions, the inner tube 65 and the outer tube 70 are similarly shaped (e.g., round, as shown in Figs. 2-4). In addition, the illustrated tubes 65, 70 are concentric and sized to define a substantially constant thickness 100 around the circumference and across the length of the outer tube 70. However, other constructions may employ different shaped inner and outer tubes or may employ one or more tapered tubes to vary the geometry of the space 95. For example, one construction could use a circular inner tube with an octagonal outer tube. This arrangement creates a space having a thickness that varies around the tube's circumference (labeled "C" in Fig. 5), but is substantially constant when measured along the length (labeled "L" in Fig. 4) of the outer tube. In other constructions, a tapered inner tube and/or a tapered outer tube can be used to create a space having a thickness that varies along the length "L" of the outer tube but is substantially constant when measured along the circumference "C".

With reference to Fig. 3, the outer tube 70 includes windows 105 that pass through the wall of the tube 70. The windows 105 act to reduce the shear within the damping member 75, thus allowing for more damping between the inner tube 65 and the outer tube 70. Thus, the position, size, shape, and quantity of windows 105 can have a significant effect on the damping characteristics of the handlebar assembly 15. While two oval windows 105 are illustrated, more or less than two windows 105 can be used in other constructions. In addition, different shaped windows 105 or combinations of different shapes and sizes can be used as the particular application warrants.

While Fig. 3 illustrates an outer tube 70 that completely surrounds a portion of the inner tube 65, other constructions may use an outer tube that is split along the length such that it does not completely surround the inner tube 65. The outer tube 70 could also be made from multiple separate parts.

The damping member 75 is positioned within the annular space 95, as shown in Figs. 4 and 5, and attaches the inner tube 65 to the outer tube 70. In preferred constructions, a resilient material such as urethane rubber is used to form the damping member 75. The damping member 75 extends beyond the ends of the outer tube 70 and tapers down to the outside diameter of the inner tube 65 to define two tapered end portions 110. The tapered end portions 110 provide a finished look to the assembly 15 and cover the ends of the outer tube 70. In addition, the damping member 75 is visible through, and may extend into or beyond, the windows 105 formed within the wall of the outer tube 70.

The outer tube 70 is formed to have sufficient length to allow it to engage the stem 45. Some constructions may use longer or shorter tubes as may be required to allow for proper engagement with the stem. In addition, the length of the outer tube 70, and thus the ratio of the damping member thickness to the outer tube length, may be varied to change the damping. For example, a construction with a damping member thickness of 1.4 mm and an outer tube length of 25 mm results in a thickness to length ratio of 0.056. Thickness to length ratios are preferably less than about 0.1, and more preferably less than about 0.06.

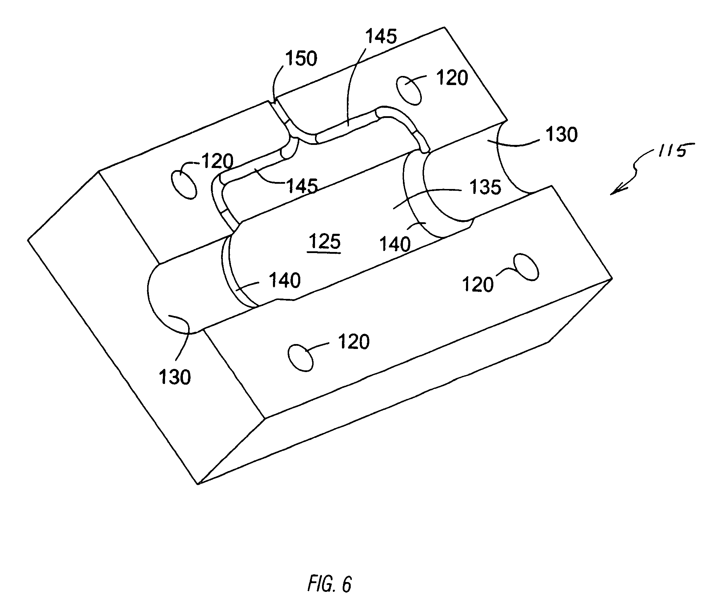

The handlebar assembly can be produced using a mold like the one shown in Fig. 6. One half of the mold 115 is illustrated, and the other half is essentially a mirror image. Each of the two mold halves 115 includes a plurality of through holes 120 that receive bolts or other clamping members that hold the mold halves together during the molding process. Each mold half 115 at least partially defines an inner chamber 125 that includes inner tube clamp surfaces 130, an outer tube clamp surface 135, two tapered surfaces 140, and a flow path 145.

The inner tube clamp surfaces 130 engage the inner tube 65 and hold the inner tube 65 in its desired position. The inner tube clamp surfaces 130 and the inner tube 65 cooperate to define a seal that inhibits the flow of damping material past the end of the tapered end portion surfaces 140. The outer tube clamp surface 135 engages the outer tube 70 and holds it in its desired final position. The mold half 115 illustrated in Fig. 5 holds the outer tube 70 such that it is concentric with the inner tube 65. In other constructions, the outer tube 70 can be shifted in one direction to provide an asymmetric space between the inner tube 65 and the outer tube 70. In some constructions, the outer tube clamp surface 135 includes raised portions (not shown) that engage the windows 105 of the outer tube 70. The raised portions function to assure that the outer tube is properly aligned, and can also serve to limit the amount of damping material that flows into the windows 105 of the outer tube 70.

The tapered surfaces 140 are shaped to define the tapered end portions 110 when the molding process is complete. The tapered surfaces 140 also provide a convenient inlet into the space 95 between the inner tube 65 and the outer tube 70. As such, the flow path 145 extends from each of the tapered surfaces 140 to a common feed point 150. The feed point 150 is located outside of the mold half 115 to facilitate the injection of the damping material into the assembled mold.

The flow path 145 is shaped to guide the damping material into the annular space 95 as well as the tapered end portions 110 adjacent the ends of the outer tube 70. In addition, the mold halves 115 allow the damping material to flow at least partially into any windows 105 defined within the outer tube 70.

To manufacture the handlebar assembly 15, the outer tube 70 is cut to size and windows 105 in the outer tube 70 are formed (e.g., cut, machined, punched, and the like). The outer tube 70 is then positioned over the inner tube 65, and the inner tube 65 is bent to the desired handlebar configuration. Alternatively, the outer tube 70 can be positioned over the inner tube 65 after the inner tube 65 has been bent. The inner tube 65 and the outer tube 70 are then clamped into the mold 115 in their desired final positions. The mold 115 is then closed and the damping material is injected in a liquid form into the mold 115 through the common feed point 150. The damping material flows between the inner tube 65 and the outer tube 70 and into the windows 105. The resilient material is allowed to cure to bond the inner tube 65 to the outer tube 70 and complete the assembly 15.

In preferred constructions, a two-part urethane rubber compound is used to form the damping member 75. The two parts are mixed together to form a liquid that is injected into the mold and subsequently cured to form the damping member 75. In other constructions, the damping member could be positioned between the inner tube 65 and the outer tube 70 in a solid form. In addition, other materials could be used (e.g., polyurethane, plastic, natural rubber, cork, and the like).

To improve the bond between the inner tube 65 and the outer tube 70, some constructions roughen the outer surface of the inner tube 65 and/or the inner surface of the outer tube 70. Sanding, scoring, knurling, sandblasting, or any other suitable process can roughen the surfaces. The roughened surface produces more surface area and improves the bond between the resilient material and the roughened tube.

In use, the handlebar assembly 15 is attached to the stem 45 of the bicycle 10 by clamping the outer tube 70 with the split clamp 60. The rider steers the bicycle 10 by rotating the inner tube 65 and the stem 45 to turn the front wheel 40. Vibrations picked up by the front wheel 40 are transmitted to the fork 35, the stem 45, and the outer tube 70. The damping member 75 provides damping between the outer tube 70 and the inner tube 65, thus isolating the rider from at least a portion of the vibrations encountered by the front wheel 40.

The thickness and durometer of the damping member 75, along with the position, quantity, size, and shape of the windows 105 are chosen to achieve the desired damping, while still maintaining the desired "feel" between the rider and the bicycle 10. For example, a material with an improper durometer and thickness may provide significant damping but may feel "soft" to the rider. On the other hand, a high durometer coupled with a thin damping member 75 may result in insufficient damping.

Testing has shown that a damping member 75 having a durometer of about 80 on the A scale and a thickness of about 1.4 mm provides adequate damping without adversely affecting the feel of the bicycle 10 to the rider. Of course, other constructions with higher or lower durometer values and thinner or thicker damping members 75 may achieve suitable results depending on the particular application.

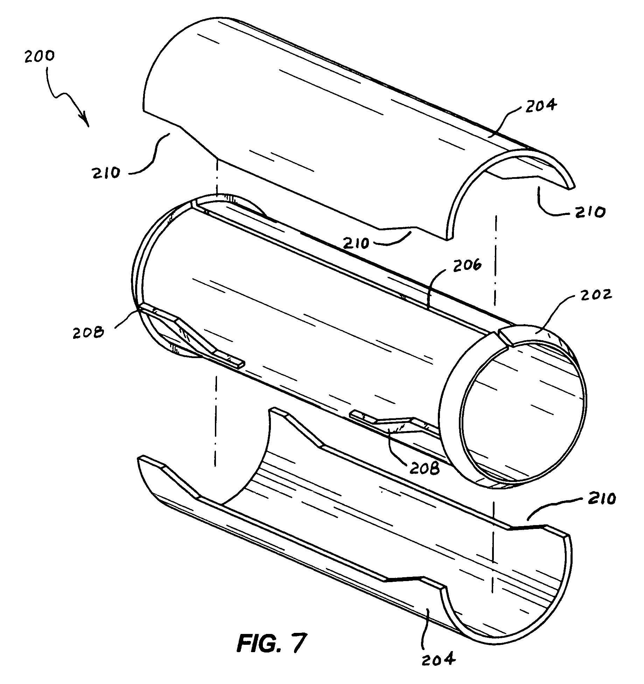

An alternative embodiment of the present invention is illustrated in Fig. 7. Rather than forming the handlebar assembly in a mold, the individual components of this alternative handlebar assembly 200 are formed separately and then assembled. More specifically, the alternative handlebar assembly 200 includes an inner member in the form of handlebars (not shown), a split damping member 202, and a two-piece outer member in the form of outer tube portions 204.

The split damping member 202 is molded separate from the other parts and includes a longitudinal split 206 that facilitates mounting the damping member 202 onto a handlebar (not shown in Fig. 7). When positioned on the handlebar, it is preferred that the split be aligned with a bottom surface of the handlebar so that the split is less visible. The split damping member 202 can be bonded to the handlebar, if necessary. The damping member 202 includes four stylized raised portions 208, two of which are shown in Fig. 7 and the other two are directly opposite.

The outer tube portions 204 are dimensioned to be positioned over the damping member 202 and bonded or otherwise secured in place. The outer tube portions 204 sandwich the damping member 202 and, when secured in place, create a unified handlebar assembly. One of the outer tube portions 204 covers most of the longitudinal split 206 of the damping member 202. Each outer tube portion 204 includes cutouts 210 that correspond to the shape of the raised portions 208 so that the raised portions 208 are positioned between the cutouts 210 when the assembly is complete.

Although the invention has been described in detail with reference to certain preferred embodiments, variations and modifications exist within the scope and spirit of the invention as described and defined in the following claims.

## Claims

1. A bicycle comprising:
a frame;
a wheel supported by the frame and pivotable to steer the bicycle; and
a handlebar assembly coupled to the wheel and including:
an inner member movable to pivot the wheel;
an outer member at least partially surrounding a portion of the inner member; and
a damping member disposed between the inner member and the outer member and providing vibration damping between the wheel and the inner member.

2. The bicycle of claim 1, wherein the inner member comprises a handlebar.

3. The bicycle of claim 1, wherein the damping member bonds the inner member to the outer member.

4. The bicycle of claim 1, wherein the outer member includes a first end and a second end and wherein the damping member extends beyond the first end and the second end.

5. The bicycle assembly of claim 1, wherein the inner member and the outer member cooperate to define an annular space sized to receive the damping member, and wherein the annular space is about 1.4 mm thick.

6. The bicycle of claim 1, wherein the damping member includes a urethane rubber.

7. The bicycle of claim 1, wherein the outer member includes a window that exposes at least a portion of the damping member.

8. The bicycle of claim 1, wherein the outer member includes a plurality of windows that expose at least a portion of the damping member.

9. The bicycle of claim 1, further comprising a stem that clamps the outer member to couple the handlebar assembly to the wheel.

10. A handlebar assembly adapted to be used with a steering stem, the handlebar assembly comprising:
a handlebar having hand positions;
an outer member at least partially surrounding a portion of the handlebar and positioned to be clamped by the steering stem; and
a damping member disposed between the handlebar and the outer member.

11. The handlebar assembly of claim 10, wherein the damping member bonds the handlebar to the outer member.

12. The handlebar assembly of claim 10, wherein the outer member includes a first end and a second end and wherein the damping member extends beyond the first end and the second end.

13. The handlebar assembly of claim 10, wherein the handlebar and the outer member cooperate to define an annular space sized to receive the damping member, and wherein the annular space is between about 0.2 mm and 10 mm thick.

14. The handlebar assembly of claim 10, wherein the handlebar and the outer member cooperate to define an annular space having a thickness of about 1.4 mm.

15. The handlebar assembly of claim 10, wherein the outer member completely surrounds a portion of the handlebar.

16. The handlebar assembly of claim 10, wherein the outer member is positioned to cover a central portion of the handlebar.

17. The handlebar assembly of claim 10, wherein the damping member includes urethane rubber.

18. The handlebar assembly of claim 10, wherein the outer member includes a window that exposes a portion of the damping member.

19. The handlebar assembly of claim 10, wherein the ratio of the thickness of the damping member to the length of the outer member is less than about 0.1.

20. A method of manufacturing a handlebar assembly, the method comprising:
forming a handlebar to have a first hand position and a second hand position;
positioning an outer member such that it at least partially surrounds a portion of the handlebar;
injecting a material between the handlebar and the outer member; and
allowing the material to harden to form a damping member between the handlebar and the outer member.

21. The method of claim 20, wherein the injection step further includes bonding the handlebar to the outer member using the damping member.

22. The method of claim 20, further comprising supporting both the handlebar and the outer member in a mold during the injecting step.

23. The method of claim 20, further comprising forming a window in the outer member to expose a portion of the damping member.
